# EUROPEAN PATENT SPECIFICATION

(11) **EP 2 678 613 B1**
(45) Date of publication and mention of the grant of the patent: **03.04.2024**
(21) Application number: 12706890.6
(22) Date of filing: 21.02.2012
(51) Int. Cl.: F24H 1/10, F22B 1/28, A47L 11/40, A47L 13/22, D06F 75/18, F22B 35/10, F24H 9/20, G05D 7/01, F01K 13/00

(54) **ELECTRICAL WATER HEATING APPLIANCES**
ELEKTRISCHES WASSERHEIZGERÄT
APPAREILS ÉLECTRIQUES DE CHAUFFAGE D'EAU

(30) Priority: 21.02.2011 GB 201102971
(43) Date of publication of application: 01.01.2014
(73) Proprietor: Strix Limited, Ronaldsway, Isle of Man IM9 2RG (GB)
(72) Inventor: ASHTON, Steven Anthony, Laxey Isle of Man IM4 7NR (GB)
(74) Representative: Dehns
(86) International application number: PCT/GB2012/050378
(87) International publication number: WO 2012/114092

(56) References cited:
- EP-A1- 0 478 508
- EP-A1- 0 543 534
- EP-A1- 1 147 729
- EP-A1- 1 865 099
- EP-A1- 1 884 157
- EP-A2- 0 117 852
- EP-A2- 0 316 576
- WO-A1-93/02547
- WO-A1-2010/089565
- WO-A1-2011/117659
- WO-A2-01/67815
- WO-A2-2008/006707
- WO-A2-2009/081159
- DE-A1- 4 134 962
- GB-A- 775 751
- GB-A- 2 423 240
- GB-A- 2 432 201
- US-A- 2 827 076
- US-A- 3 138 177
- US-A- 3 201 880
- US-A- 3 941 518
- US-A- 3 941 518
- US-A- 5 189 726
- US-A1- 2008 265 064

## Description

The present invention relates to electrical appliances that heat water, and potentially produce steam, for domestic uses. Such appliances include kettles, beverage makers such as coffee makers and tea and other infusion beverage makers, baby milk makers, steam nozzles such as milk frothing wands, steam cookers, steam irons, steam cleaners, wallpaper strippers and other hand-held steam generating appliances. In particular the invention relates to water heating and steam generating appliances that comprise a water pump.

In any appliance where water is pumped between components it may be desirable to control the water flow rate at least at some points in the flow system. The Applicant has appreciated that it may be especially important to control the flow rate of water pumped to a water heating or boiling means, particularly when the main purpose is to generate steam. Although various methods of controlling water flow rate are known, for example by controlling pump speed, there remains a need for a simple and cost effective solution in domestic water heating and steam generating appliances.

WO 01/67815 discloses an electrical water heating appliance comprising a water heating means, and a control valve arranged in a flow path from a cold water supply pipe, wherein the control valve is a regulator valve automatically regulating the water flow therethrough to have a relatively constant rate despite variations in the water inlet pressure.

The present invention provides an electrical water heating appliance according to claim 1.

It will be appreciated that by arranging a flow regulating valve means in the flow path between the pump means and the water heating means there may be provided a straightforward and cost-effective solution for ensuring a substantially uniform flow rate of water to the heating means, without necessarily having to adjust or control the operation of the pump means. It should be understood that a uniform flow rate as defined herein is a flow rate having a substantially constant value that is greater than zero. Thus the invention relates to a flow regulating valve which can be distinguished from a simple ON/OFF valve in so far as it functions to regulate the flow rate. What is meant by regulating the flow rate is that the valve means provides an output (non-zero) flow rate different from the input (non-zero) flow rate. The valve means is able to provide a uniform flow rate to the heating means as it regulates the input flow rate, which may vary due to various factors, and converts it to a constant output flow rate. Accordingly the uniform flow rate provided by the valve means can be selected to enable optimal functioning of the water heating means regardless of the input flow rate from the pump means.

The valve means may comprise any suitable type of flow regulating arrangement. In some sets of embodiments the valve means comprises a flow throttling arrangement. A benefit of a flow throttling valve means is that it can be made very small and can thus be easily integrated with flow pipes even in small domestic appliances. In one set of embodiments the valve means may comprise a spiral flow path. Such a valve means may be able to regulate the flow at lower pressures but may not function well over a wider pressure range. In another set of embodiments the valve means may comprise a tortuous or turbulent flow path. A tortuous or labyrinth flow path may be provided by a high resistance flow channel along which the pressure drops relatively rapidly with distance, from a relatively high water pressure at the inlet of the valve means to a relatively low or zero discharge pressure. An advantage of such valve means is that the tortuous or turbulent flow path, e.g. comprising turns and/or obstacles, can act to regulate the flow rate without necessarily being narrow and thus the valve means may be less likely to become blocked. The flow path may comprise a configuration of baffles that impede flow and introduce turbulence. In another set of embodiments the valve means may comprise a vortex flow path. By arranging for water to swirl around an outlet there is a resulting pressure drop that can act to regulate the flow through the valve means.

A potential drawback of the valve means comprising a throttling flow path is that the flow path, for example narrowed or baffled portions, may become clogged, for instance by mineral deposits caused by hard water. Instead, in preferred sets of embodiments the valve means comprises a diaphragm arranged to regulate the flow. Thus the flow path in the valve means, for example its cross-sectional area and/or length, may not be arranged to throttle the flow itself (or at least not to the same degree) and instead the diaphragm may be used to provide a throttling effect. The diaphragm may be solid or it may comprise a net-like or perforated barrier. The diaphragm may be flexible and could, for example, move back and forth. The diaphragm may be elastic and could, for example, expand and retract to regulate the flow. In one set of embodiments the diaphragm is arranged to be responsive to the pressure of incoming water such that it undergoes increasing distortion as the pressure increases. This distortion can operate to increase the resistance to flow through the valve means. In some embodiments, a diaphragm may control the passage of water into a labyrinth flow passage and may act to increase the length of the labyrinth flow passage through which water must pass in response to an increase in inlet pressure. An advantage of such diaphragm-controlled valve means is that they can be very accurate in regulating the flow and achieving a substantially uniform flow rate. They can also operate over a wide range of pressures. Preferred materials for a flexible/elastic diaphragm are natural rubber and synthetic rubbers such as silicone.

A diaphragm-controlled valve means may also be arranged as a non-return valve. In one set of embodiments an elastic diaphragm acts to seal the valve means against backflow. For example, to provide a non-return function the diaphragm may seal a restricted inlet when the water pressure is reduced below a predetermined threshold pressure. In other embodiments a flexible diaphragm or membrane may close the valve means to input flow or output flow when the inlet pressure falls below a minimum pressure.

In many appliances the water pressure in the flow path from the pump means to the heating means may vary in time and this could result in the valve means achieving a flow rate that also varies with pressure. In a particularly preferred set of embodiments the valve means comprises an elastic diaphragm arranged to regulate the flow in a pressure-compensating manner. This means that the diaphragm acts to provide a substantially uniform flow rate across a range of water pressures that may occur in use.

It will be appreciated that using a pressure-compensating valve means in the water flow path can help to ensure a consistent performance for the water heating means regardless of the upstream supply pressure and/or any downstream restrictions that may cause a pressure backup. This may be particularly important when the heating means is used to generate steam, especially for domestic purposes where the release of steam may be controlled for safety purposes. Such stability is achieved independent of operation of the pump means and without introducing unnecessarily complex flow control means into the water supply system. Furthermore, the presence of a pressure-compensating valve means can allow the use of wider tolerances for other components (e.g. the pump means, a water accumulator where provided, and any pressure relief valves) in the system as any pressure fluctuations will be absorbed without affecting the water heating means. As a result the water flow system can be achieved at lower cost and with improved performance control.

In a preferred set of embodiments of the invention, the valve means generally comprises an inlet and an outlet through which water respectively enters and exits, and an elastic diaphragm that prevents water that enters the inlet from flowing directly to the outlet. The inlet and outlet are preferably located so that they face each other, with the diaphragm seated on a support shelf and located between them. The diaphragm constrains water that enters the valve means to pass through at least one flow control channel in order for the water to reach the outlet and flow out. The diaphragm is responsive to pressure of the entering water, and as pressure of the inlet water increases, the diaphragm undergoes increasing distortion. The diaphragm and at least one flow control channel are configured so that as the distortion increases, the resistance to flow of the at least one flow channel increases substantially proportional to the inlet water pressure. As a result, the output flow rate of the valve means is substantially independent of changes in inlet water pressure. Some examples of suitable diaphragm-controlled valve means having a pressure-compensating function are disclosed in US 4,210,287 and WO 2007/074428.

In one set of embodiments the at least one flow control channel is an open-faced flow channel. In operation, the diaphragm distorts with increasing inlet pressure to cover an increasing length, hereinafter "cover length", of the open face of the channel. Water is constrained to flow through the covered length of the channel to reach the outlet and as the cover length increases with inlet pressure, the channel resistance to flow of water increases. In some embodiments, as the diaphragm distorts with increasing inlet pressure, the diaphragm may first cover the open face of a flow channel at a location, hereinafter a "junction", at which the channel communicates with the outlet. As the inlet pressure increases, the diaphragm distortion increases and may cover the open face of the channel at progressively greater distances from the junction and at locations closer to the support shelf. The cover length of the channel extends from the junction and increases with increasing inlet pressure in a direction away from the outlet towards the support shelf.

In some embodiments, the open-faced flow control channel has a cross-section that decreases with distance from the junction and the support shelf supports the diaphragm along a planar contour parallel to the bottom of the channel, such that, to regulate fluid flow, with increasing inlet fluid pressure the diaphragm covers portions of the open face that are farther from the junction in a region where the cross-section decreases with distance from the junction. By narrowing the channel with increasing distance along the channel from the junction there is a decrease in channel cross-section with increasing distance along the channel from the junction and a concomitant greater rate of channel flow resistance with increasing cover length. The flow channel narrowing is optionally determined so that channel resistance to fluid flow is substantially proportional to inlet water pressure, as a result of which, the valve means can provide a regulated output flow of fluid that is substantially independent of inlet pressure.

In some embodiments, the characteristics of the diaphragm and the pressure regime in which the valve means operates are such that there is a decrease in rate of increase of cover length with inlet pressure but the linear decrease in channel width with channel distance can satisfactorily compensate for the cover length rate decrease. For water inlet pressures between about 0.5 bar and about 6 bar, which are typically encountered in domestic applications, it has been found that a satisfactory linear decrease in channel width is generally obtained if the side walls converge with channel distance at an angle between about 10° and about 50°.

It will be appreciated that the pressure-compensating valve means will be designed or selected to provide the uniform flow rate across the operating pressure range of the appliance. Although the operating pressure range may vary from one appliance to another, in at least one set of embodiments the pressure-compensating valve means provides the substantially uniform flow rate regardless of the water pressure in the range of 1.0 to 2.0 bar. Such pressure ranges may be typical of domestic appliances that heat water to generate steam, such as steam irons or steam cookers.

There will now be described some preferred features of the invention discussed above.

The uniform flow rate provided by the valve means (whether or not it compensates for pressure variations) may be selected according to the type of appliance, its size, mode of operation, etc. According to the claimed invention, the uniform flow rate is selected from a range of 10-15 Uh. Such flow rates may be desirable in domestic appliances that heat water to generate steam, such as steam irons or steam cookers.

The valve means may be arranged to achieve a substantially uniform flow rate that has a fixed value. However it may be preferred in at least some circumstances for the valve means to have an adjustable flow rate, e.g. adjustable across the claimed range of 10-15 Uh. The valve means could comprise, for example, a dial that can be manually turned to select the desired output flow rate. This can allow a user of the appliance to select an appropriate flow rate for the water heating means, which may directly affect the rate of steam production in appliances that generate steam. Accordingly an adjustable flow rate valve means may be a preferred feature of steam generating appliances such as food steamers, steam irons and handheld steam generators (wallpaper strippers, milk frothers, steam cleaners, etc.).

The flow-regulating valve means may comprise one or more valve means. Where multiple valve means are provided they may be the same or different. A number of valve means may be provided in series or in parallel in the water flow path. In one preferred set of embodiments the valve means comprises first and second flow regulating valve means, preferably pressure-compensating valve means, arranged in parallel with a user-operated flow switch e.g. on/off valve in series with one of the valve means. An advantage of this arrangement is that a user can manually select whether to split the water flow path through one or both valve means. When the flow switch is opened, water will flow through both flow regulating valve means in parallel and thus a uniform flow rate will be provided by two branches of the flow path, which can result in an overall increase in the flow rate to the water heating means. This can provide a manually-operated boost when it is desired to heat a larger volume of water for a time, for example when a burst of steam is required.

As has already been mentioned above, the electrical water heating appliance may be a steam generating appliance. Thus in at least some preferred embodiments the water heating means is a boiler for steam generation. One preferred form of electric water boiler is described in the Applicant's published application WO 2010/089561. The water boiler preferably comprises a water inlet, an electric heater, a steam outlet and an evaporation space bounded by at least one surface in thermal contact with the heater, wherein the evaporation space is configured to present an expanding cross-sectional area in a direction away from the water inlet. According to one set of embodiments the water boiler may comprise a conical water boiling chamber.

Electric water boilers as described above may usefully be used for the continuous generation of steam. However, they may be particularly beneficial for appliances where steam is required "on demand" since the features of the boiler allow for the very rapid production of steam from when water first enters the water inlet as compared, for example, with a more traditional boiler in which a heating element is used to heat a body of water. An important factor in achieving this effect is to supply water to the boiler under pressure and thus in a particularly preferred set of embodiments the pump means is arranged to supply pressurised water to the water inlet of an electric water boiler of the kind described above, or indeed one which only has some of the features set out, which might include the feature of expanding cross-sectional area. Such an appliance could, for example, comprise an electric steam iron, a steam cleaner, wallpaper stripper, or any other hand-held steam generating appliance, as is described in WO 2010/089561. The pressure of the water supplied by the pump means in the flow path to the boiler is preferably in the range of 1-2 bar.

In a further embodiment, the present invention provides a domestic steam generating appliance comprising a water reservoir, a water boiler arranged to heat water and generate steam in use, and pump means connected to the water reservoir to supply water to the boiler via a water flow path, and further comprising a pressure-compensating valve means arranged in the flow path to regulate the flow of water so as to achieve a substantially uniform flow rate of water to the boiler.

According to embodiments of the invention hereinbefore described, the water flow path may include one or more of: an on/off valve for controlling the entry of water into the boiler or water heating means; an accumulator for storing water; a pressure relief valve; and/or a cordless connector interface. Such components may be provided in any combination and in any order in the flow path, including serial and/or parallel arrangements. The benefits of using an on/off valve and/or a water accumulator to control the supply of water to a boiler and thus achieve a surge of water and produce an initial "whoosh" of steam are discussed in more detail in WO 2010/089561.

In some embodiments the pump means is arranged to operate continuously whilst the appliance is switched on. This ensures that pressure is maintained so as to minimise the amount of time to deliver water to the boiler or water heating means, and to refill a water accumulator (where provided). A bypass valve - e.g. to deliver water back to the reservoir - may be provided to prevent the pump stalling or drawing excessive current when delivery of water is not required.

In some embodiments there may be provided means to delay operation of the pump until the boiler or water heating means has reached a predetermined operating temperature. A temperature sensitive control means may be arranged to provide an electrical connection to the pump means only when it is detected that the operating temperature has been reached. Alternatively a timer could be programmed to delay the operation of the pump means until such time that the boiler is expected to have heated up. It is preferred that the pump means and the electric heating means of the boiler are connected electrically in parallel so that they may be controlled by a common on/off switch. This allows for simple "one button" operation of the appliance, while also ensuring that the boiler is hot enough when water is pumped into it that steam generation starts rapidly. Advantageously the start-up time may be reduced.

In some embodiments the appliance further comprises water filter means for removing mineral ions and other contaminants that could, for instance, cause a build up of scale in the system components and interfere with their operation. Such mineral deposits can be particularly detrimental to the accurate operation of the flow regulating valve, especially a pressure-compensating valve, as they may clog the diaphragm or flow throttling arrangement therein. Although the water filter means may be provided downstream of the pump means, in the water flow path to the boiler or water heating means, so as to treat water before it enters the flow regulating valve, in at least some embodiments it is preferred that the filter means is provided upstream of the pump means so that water passing through the pump has already been treated by the filter. This can help to minimise the adverse effects of unfiltered e.g. hard water. In some embodiments the water filter means is arranged to treat water as it flows from a or the water reservoir to the pump means.

It will be understood that the pump means may comprise any suitable means for pushing water along the flow path to the water heating means or boiler. In a preferred set of embodiments the pump means comprises a mechanical pump (i.e. with moving parts) which does work on the water so as to move it along the flow path. However, in less preferred embodiments the pump means could instead simply use hydrostatic pressure to move water under gravity, or thermal energy could be used to create a driving force for the movement. Although a pump means is preferred that can provide a continuous flow of water, in some embodiments the pump means may comprise an elastically-charged water store that can release bursts of water. The pump means may even be provided by a pressurised water reservoir. This could for example be achieved by means of a compressed air chamber or the reservoir could be elastically charged.

The appliances described above may be corded or cordless. Appliances such as steam irons that are designed for hand-held use and that may require freedom of movement can be cordless, i.e. comprising a mobile hand-held appliance part and a power base part connected to the mains electrical supply. An electrical connector may be provided to supply power to the hand-held part when it is placed on the base part. Where the appliance is cordless the mobile part may comprise an on-board reservoir for supplying water to the boiler or water heating means during cordless use. The base part and connector may be arranged to supply water to the mobile part and refill the on-board reservoir when the parts are connected. There may be provided a mutual cordless connector arrangement for both electrical power and water, for example as is described in WO 2010/089561.

Some preferred embodiments of the present invention will now be described, by way of example only, and with reference to the accompanying drawings, in which:
Figure 1 is a schematic block diagram for a steam generating appliance according to one embodiment of the invention; and
Figure 2 is a schematic block diagram for a mobile steam generating appliance according to another embodiment of the invention.

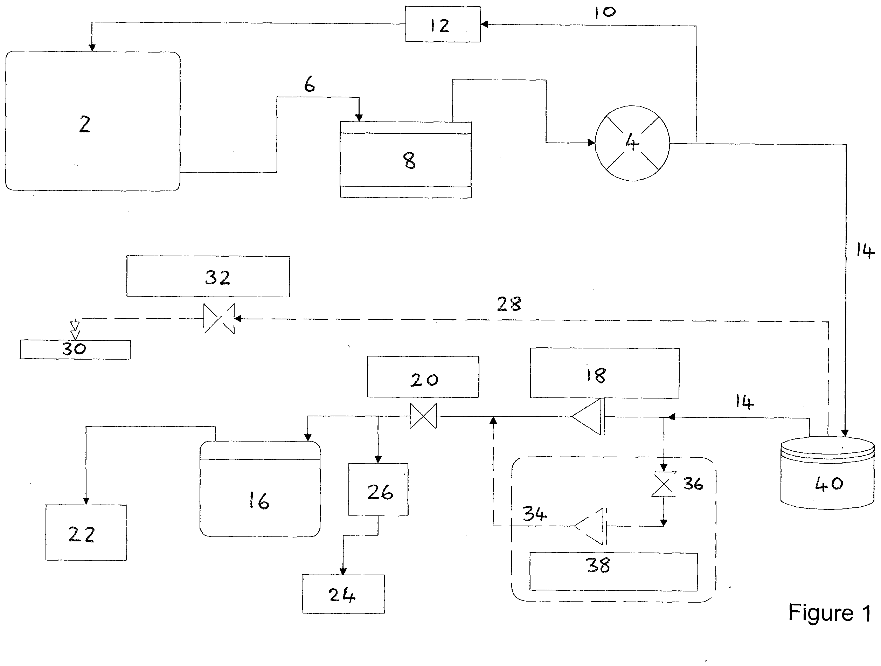

There is seen from Figure 1 a schematic layout for the water flow path in a domestic steam generator such as a hand-held steam wand or steam iron. The appliance comprises a water tank 2 for supplying water to a pump 4. In the flow path 6 between the tank 2 and the pump 4 there may optionally be provided a water filter 8 such as an ion-exchange resin filter so that the mineral ions typically present in hard water can be removed and prevented from forming scale deposits in the downstream components. It is also seen that a return flow path 10 may be provided from the pump 4 to the tank 2 so that the flow may be diverted back to the tank 2 by the pump 4 if necessary, for example due to a downstream blockage or failure in the system. In addition, the presence of a pressure relief valve 12 enables water to be re-circulated via the return flow path 10 so that pressurised water from the pump is fed back into the atmospheric pressure tank 2 when it is not required. This can allow the pump to run continuously without stalling or drawing excessive current when delivery of water is not required. If the pump is running continuously then water can quickly be re-diverted and pumped through on demand.

The flow path 14 downstream from the pump 4 is used to convey water under pressure to the boiler 16. The pumped flow path 14 includes a pressure-compensating constant flow valve 18 so that water is supplied to the boiler 16 at a uniform flow rate regardless of the input flow rate from the pump 4 and any fluctuations in pressure. The pressure-compensating constant flow valve 18 is designed or set to provide a specified flow rate for optimal performance of the boiler 16 according to the function(s) required of the appliance. Another valve 20 in the flow path 14 allows a user to turn ON/OFF the flow to the boiler 16 and thus control steam generation. Steam generated by the boiler 16 is released by a nozzle or other outlet 22. As a safety feature, steam that is backed up through the boiler 16 can be released through a steam vent 24 connected to the flow path 14 via another pressure relief valve 26.

The boiler 16 may be of the general type shown in WO 2010/089561, that is, comprising a cast non-ferrous, e.g. aluminium, main body having a conical interior chamber encircled by an embedded sheathed heating element that is approximately helical so that it wraps around the conical cavity wherein water is boiled. The chamber is closed in a pressure-tight manner by a cover member including a centrally disposed outlet. A water inlet allows water to be pumped into the boiler 16 at the coned end of the chamber. The inner surface of the conical chamber forms a heated evaporation surface at which steam vapour is produced. As the conical evaporation space has an increasing cross-sectional area in a direction away from the water inlet and towards the steam outlet, steam can expand as it is generated and moves up to the outlet. When water first enters the chamber it occupies a relatively small volume in the nose of the cone and is rapidly heated. The boiler 16 therefore provides a quick start-up time for steam generation.

The pumped flow path 14 may run parallel to one or more additional and optional flow paths. A first optional flow path 28 connects the pump 4 to a water outlet 30 so that pressurised water can be released in addition or as an alternative to the steam released from the nozzle 22. The water outlet 30 may comprise a nozzle so that water can be sprayed, for example when ironing. The water outlet 30 may be used to direct water into another part of the appliance, for example for beverage making. A valve 32 may optionally be provided in the flow path 28 to allow a user to control the release of water from the outlet 30.

A second optional flow path 34 may be arranged to bypass the pressure-compensating constant flow valve 18. This bypass path 34 may include another user-operated ON/OFF valve 36 for selectively supplying water to a second pressure-compensating constant flow valve 38. When the valve 36 is switched ON and water from the flow path 14 is split onto the bypass path 34 there are two pressure-compensating constant flow valves 18, 38 operating in parallel. This can allow a user to temporarily boost the overall flow rate to the boiler 16 so that extra steam can be generated on demand.

It is also seen from Figure 1 that a water accumulator 40 can optionally be provided in the pumped flow path 14 so as to temporarily store water and then provide an elastically-charged "surge" of flow. Such a water accumulator is described in more detail in WO 2010/089561 and may simply comprise an elastically expandable bladder, optionally with a sprung piston to apply pressure to the water stored in the bladder. The accumulator 40 may be included in appliances such as steam irons or steam cleaners, as is described in WO 2010/089561, when it is desired to avoid a slow build-up of steam and instead produce an initial burst of steam provided by a surge of water from the accumulator. Other appliances, such as steam cookers or steam wands for frothing milk, may not include the accumulator as a more gentle steam release may be preferred.

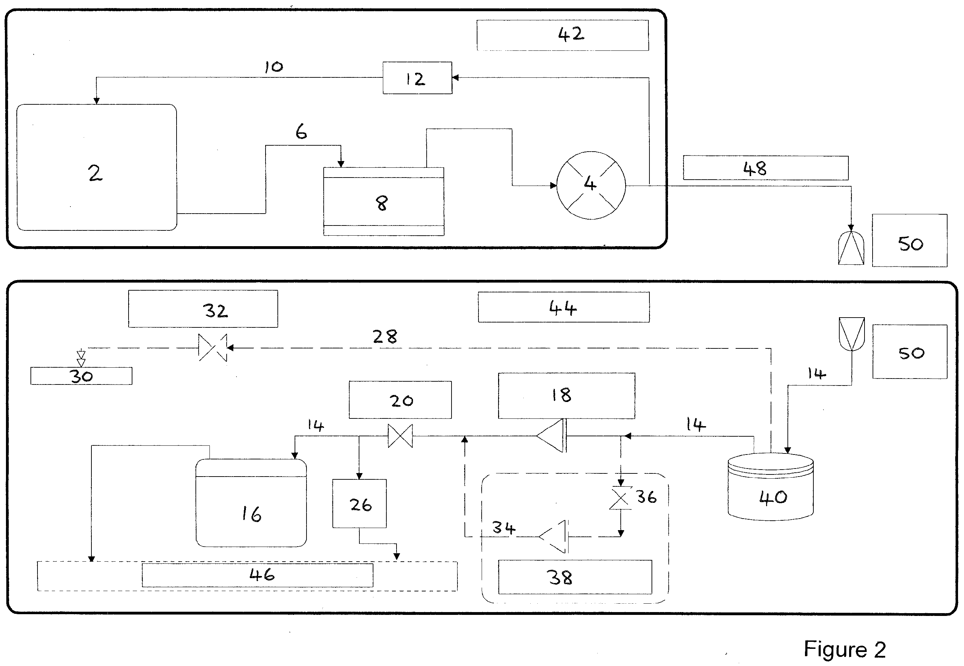

Figure 2 shows a schematic layout for the water flow in a steam generating appliance comprising a mobile part, for example a hand-held steam iron or steam cleaning wand. The basic layout of the flow path and the main components is the same, except that in this appliance the water tank 2, filter 8 and pump 4 are provided in a base unit 42 while the water accumulator 40, pressure-compensating constant flow valve(s) 18, 38, ON/OFF valve 20 and boiler 16 are provided in a separable appliance part 44. Only those features which are different will be described in relation to Figure 2. In the mobile part 44, steam generated by the boiler 16 is fed to the vents 46 e.g. in an iron sole plate. Excess steam can also be released from the flow path 14 to the boiler 16 through a pressure relief valve 26 to the same vents 46. As in the previous embodiment, an optional flow path 28 enables water to be pumped to a water spray device 30 on demand of a user operating a flow switch 32.

The base part 42 may be connected to the mobile appliance part 44 through an umbilical cord 48 that carries both water and electrical connections, e.g. via separately insulated electrical wires and a water tube, and an interconnecting adaptor 50. Without the adaptor 50, the umbilical cord 48 may be long enough to provide the mobile part 44 with freedom of movement despite its connection to the base part 42. However it can be desirable for the mobile part 44 to be completely separable from the base part 42 without an unwieldy umbilical cord 48 moving with the appliance part 44. Thus, as is shown in Figure 2, the umbilical cord 48 is provided with an adaptor 50 so that the mobile part 44 can be completely separated from the base part 42. The adaptor 50 comprises a pair of cordless connectors including a cordless electrical connector - such as the Applicant's P75 cordless electrical connector set (but of course any other suitable connector could be used) - and a water connector.

The steam generating appliance described with respect to either of the Figures may be a steam iron. An example steam iron may have a target flow rate of 40 ml/min (not within the claimed invention) through the boiler. A typical pump of the type currently used in steam irons could be specified to deliver the same flow rate (40 ml/min) at a nominal system pressure - 1.5 bar for example. However in reality the actual flow rate delivered by the pump will vary from the target flow rate for two main reasons. Firstly, for a given pressure, there may be a wide tolerance between pumps - typically +/- 25%. Secondly, the system pressure may vary significantly due to many factors. For example, the system pressure could vary in normal use between 1.0 bar and 2.0 bar and this could cause a further +/-25% variation in flow rate. So the initial target flow rate of 40 ml/min (+/-25%) x (+/-25%) would in reality vary in a range of 22.5 ml/min to 62.5 ml/min. Such a wide variation would be noticeable to the user but the presence of the pressure-compensating flow valve(s) ensures that water is supplied to the boiler at a uniform flow rate, e.g. 40 ml/min (not within the claimed invention), regardless of variations in pump performance between appliances and regardless of pressure variations experienced in an appliance. As a result there is less burden on the appliance manufacturer to implement a pump with tight tolerances and no need for a more complicated control system to alter the output from the pump or to regulate the flow.

The pressure-compensating constant flow valve(s) described above may be set at a constant flow rate or they may allow a user to adjust the flow rate. The pressure-compensating constant flow valve(s) may include an integral non-return valve so as to reduce the effect of variations in back-pressure and thus enable a smoother flow through the boiler. Examples of a suitable pressure-compensating constant flow valve are available from Netafim (www.netafim.com) and sold as on-line pressure-compensating "drippers". Such irrigation drippers or emitters are also available from a number of other manufacturers.

While the invention has been described above with respect to two preferred embodiments, it will be appreciated that the aspects and features of the invention may be applied to many different types of appliance, especially other appliances which generate steam such as wallpaper strippers and other hand-held steam generating appliances.

## Claims

1. An electrical water heating appliance comprising pump means (4) connected to a water heating means (16) via a water flow path (14), and further comprising valve means (18) arranged in the flow path (14), wherein the valve means (18) is a pressure-compensating valve (18) arranged to regulate the flow of water to the heating means (16) so as to achieve a substantially uniform flow rate regardless of the water pressure in the range of 1.0 to 3.0 bar,
wherein the uniform flow rate is selected from a range of 10-15 Uh.

2. An electrical water heating appliance as claimed in claim 1, wherein the valve (18) comprises a flow throttling arrangement.

3. An electrical water heating appliance as claimed in claim 2, wherein the valve (18) comprises a tortuous or turbulent flow path.

4. An electrical water heating appliance as claimed in claim 2 or 3, wherein the valve (18) comprises an elastic diaphragm arranged to regulate the flow by distorting in response to the pressure of water entering the valve.

5. An electrical water heating appliance as claimed in claim 4, wherein the elastic diaphragm is arranged to regulate the flow in a pressure-compensating manner.

6. An electrical water heating appliance as claimed in any preceding claim, wherein the valve (18) provides the uniform flow rate regardless of the water pressure in the range of 1.0 to 2.0 bar.

7. An electrical water heating appliance as claimed in any preceding claim, further comprising a water filter means (8) provided upstream of the pump means (4).

8. An electrical water heating appliance as claimed in any preceding claim, consisting of a domestic steam generating appliance comprising a water reservoir (2), wherein the water heating means (16) is a water boiler (16) arranged to heat water and generate steam in use, wherein the pump means (4) is connected to the water reservoir (2) to supply water to the boiler (16) via the water flow path (14), and the valve (18) is arranged in the flow path (14) to regulate the flow of water so as to achieve a uniform flow rate of water to the boiler (16).

9. A domestic steam generating appliance as claimed in claim 8, wherein the water flow path (14) includes an on/off valve (20) for controlling the entry of water into the water boiler (16) and an accumulator (40) for storing water.

10. A domestic steam generating appliance as claimed in claim 8 or 9, wherein the appliance is cordless and comprises a mobile hand-held appliance part and a power base part.

## Patentansprüche

1. Elektrisches Wasserheizgerät, das ein Pumpenmittel (4) umfasst, das mit einem Wasserheizmittel (16) über einen Wasserströmungspfad (14) verbunden ist, und weiter ein Ventilmittel (18) umfasst, das im Strömungspfad (14) angeordnet ist, wobei das Ventilmittel (18) ein Druckausgleichsventil (18) ist, das angeordnet ist, um die Wasserströmung zum Heizmittel (16) so zu regulieren, dass eine im Wesentlichen gleichmäßige Durchflussrate unabhängig vom Wasserdruck im Bereich von 1,0 bis 3,0 bar erreicht wird,
wobei die gleichmäßige Durchflussrate aus einem Bereich von 10-15 l/h ausgewählt ist.

2. Elektrisches Wasserheizgerät nach Anspruch 1, wobei das Ventil (18) eine Durchflussdrosselungsanordnung umfasst.

3. Elektrisches Wasserheizgerät nach Anspruch 2, wobei das Ventil (18) einen gewundenen oder turbulenten Strömungspfad umfasst.

4. Elektrisches Wasserheizgerät nach Anspruch 2 oder 3, wobei das Ventil (18) eine elastische Membran umfasst, die angeordnet ist, um den Durchfluss durch Verformung als Reaktion auf den Druck des in das Ventil eintretenden Wassers zu regulieren.

5. Elektrisches Wasserheizgerät nach Anspruch 4, wobei die elastische Membran angeordnet ist, um den Durchfluss in einer druckkompensierenden Weise zu regulieren.

6. Elektrisches Wasserheizgerät nach einem vorstehenden Anspruch, wobei das Ventil (18) die gleichmäßige Durchflussrate unabhängig vom Wasserdruck im Bereich von 1,0 bis 2,0 bar bereitstellt.

7. Elektrisches Wasserheizgerät nach einem vorstehenden Anspruch, weiter umfassend ein Wasserfiltermittel (8), das stromaufwärts des Pumpenmittels (4) bereitgestellt ist.

8. Elektrisches Wasserheizgerät nach einem vorstehenden Anspruch, bestehend aus einem Haushaltsdampferzeugungsgerät, das einen Wasserbehälter (2) umfasst, wobei das Wasserheizmittel (16) ein Wasserboiler (16) ist, der so angeordnet ist, dass er Wasser erhitzt und im Gebrauch Dampf erzeugt, wobei das Pumpenmittel (4) mit dem Wasserreservoir (2) verbunden ist, um dem Boiler (16) über den Wasserströmungspfad (14) Wasser zuzuführen, und das Ventil (18) in dem Strömungspfad (14) angeordnet ist, um die Wasserströmung so zu regulieren, dass eine gleichmäßige Durchflussrate von Wasser zu dem Boiler (16) erreicht wird.

9. Haushaltsdampferzeugungsgerät nach Anspruch 8, wobei der Wasserströmungspfad (14) ein Ein/Aus-Ventil (20) zum Steuern des Eintritts von Wasser in den Wasserboiler (16) und einen Akkumulator (40) zum Speichern von Wasser beinhaltet.

10. Haushaltsdampferzeugungsgerät nach Anspruch 8 oder 9, wobei das Gerät schnurlos ist und ein mobiles, handgeführtes Geräteteil und ein Netzteil umfasst.

## Revendications

1. Appareil électrique de chauffage d'eau comprenant un moyen de pompe (4) relié à un moyen de chauffage d'eau (16) par l'intermédiaire d'un trajet d'écoulement d'eau (14), et comprenant en outre un moyen de soupape (18) agencé dans le trajet d'écoulement (14), dans lequel le moyen de soupape (18) est une soupape de compensation de pression (18) agencée pour réguler l'écoulement d'eau vers le moyen de chauffage (16) de manière à obtenir un débit sensiblement uniforme quelle que soit la pression d'eau dans la plage de 1,0 à 3,0 bar,
dans lequel le débit uniforme est sélectionné dans une plage de 10 à 15 l/h.

2. Appareil électrique de chauffage d'eau selon la revendication 1, dans lequel la soupape (18) comprend un dispositif d'étranglement de débit.

3. Appareil électrique de chauffage d'eau selon la revendication 2, dans lequel la soupape (18) comprend un trajet d'écoulement tortueux ou turbulent.

4. Appareil électrique de chauffage d'eau selon la revendication 2 ou 3, dans lequel la soupape (18) comprend un diaphragme élastique agencé pour réguler l'écoulement en se déformant en réponse à la pression d'eau entrant dans la soupape.

5. Appareil électrique de chauffage d'eau selon la revendication 4, dans lequel le diaphragme élastique est agencé pour réguler l'écoulement de manière à compenser la pression.

6. Appareil électrique de chauffage d'eau selon une quelconque revendication précédente, dans lequel la soupape (18) fournit le débit uniforme quelle que soit la pression d'eau dans la plage de 1,0 à 2,0 bar.

7. Appareil électrique de chauffage d'eau selon une quelconque revendication précédente, comprenant en outre un moyen de filtre à eau (8) prévu en amont du moyen de pompe (4).

8. Appareil électrique de chauffage d'eau selon une quelconque revendication précédente, consistant en un appareil domestique de production de vapeur comprenant un réservoir d'eau (2), dans lequel le moyen de chauffage d'eau (16) est une chaudière à eau (16) agencée pour chauffer de l'eau et produire de la vapeur en cours d'utilisation, dans lequel le moyen de pompe (4) est relié au réservoir d'eau (2) pour fournir de l'eau à la chaudière (16) par l'intermédiaire du trajet d'écoulement d'eau (14), et la soupape (18) est agencée dans le trajet d'écoulement (14) pour réguler l'écoulement d'eau de manière à obtenir un débit d'eau uniforme vers la chaudière (16).

9. Appareil domestique de production de vapeur selon la revendication 8, dans lequel le trajet d'écoulement d'eau (14) inclut une soupape marche/arrêt (20) pour commander l'entrée d'eau dans la chaudière (16) et un accumulateur (40) pour stocker l'eau.

10. Appareil domestique de production de vapeur selon la revendication 8 ou 9, dans lequel l'appareil est sans fil et comprend une partie mobile tenue à la main et une partie de base d'alimentation.
